# EUROPEAN PATENT SPECIFICATION

(11) **EP 4 266 165 B1**
(45) Date of publication and mention of the grant of the patent: **18.02.2026**
(21) Application number: 22175866.7
(22) Date of filing: 27.05.2022
(51) Int. Cl.: G06F 3/06

(54) **ATTRIBUTE-ONLY READING OF SPECIFIED DATA**
NUR-ATTRIBUT-LESEN VON SPEZIFIZIERTEN DATEN
LECTURE UNIQUEMENT PAR ATTRIBUTS DES DONNÉES SPÉCIFIÉES

(30) Priority: 19.04.2022 US 202217723533
(43) Date of publication of application: 25.10.2023
(73) Proprietor: Dell Products L.P., Round Rock TX 78682 (US)
(72) Inventor: ARMANGAU, Philippe, Acton, 01720 (US); YIM, Wai C., Merrimack, NH, 03054 (US); HARAVU, Nagasimha, Apex, 27502 (US)
(74) Representative: Bardehle Pagenberg Partnerschaft mbB Patentanwälte Rechtsanwälte

(56) References cited:
- US-A1- 2017 199 707
- US-A1- 2019 303 573
- US-A1- 2021 034 235
- US-A1- 2021 149 798

## Description

### Technical field

The present invention relates to the field of data storage.

### BACKGROUND

Data storage systems are arrangements of hardware and software in which storage processors are coupled to arrays of non-volatile storage devices, such as magnetic disk drives, electronic flash drives, and/or optical drives. The storage processors service storage requests, arriving from host machines ("*hosts*"), which specify blocks, files, and/or other data elements to be written, read, created, deleted, and so forth. Software running on the storage processors manages incoming storage requests and performs various data processing tasks to organize and secure the data elements on the non-volatile storage devices.

Applications running on host machines commonly issue read requests to data objects served by data storage systems. For example, a host application may issue a read request for obtaining data contained in a specified range of a LUN (Logical UNit). The read request may identify the LUN by logical unit number, and may specify the range as an offset into the LUN and a length. A host application may also issue a read request to obtain a specified range of data of a particular file, e.g., by identifying a file system, file name, and range within the indicated file.

In addition to receiving read requests from hosts, data storage systems may also issue their own internal read requests. For example, a storage system may read data as part of performing data deduplication, migration, replication, relocation, or defragmentation.

US 2021/034235 A1 discloses techniques for obtaining multiple pages of one or more types of data from physical storage. US 2019/303573 discloses a method for detecting and mitigating ransomware attacks within a cloud storage environment.

### SUMMARY

Unfortunately, read requests can involve significant delays. For example, processing a read request normally entails directing a disk controller to obtain the requested data from backend storage (e.g., one or more magnetic disk drives or flash drives), which can take a significant amount of time. If the data is compressed, additional delays may be required to decompress the data. Sometimes, it is not the data itself that is relevant to the operation to be performed but rather attributes of the data. But issuing a customary read request does not return the desired attributes. What is needed, therefore, is a way of reading attributes of specified data without obtaining the data itself.

The present invention is defined by the independent claims as appended. Developments are set forth in the dependent claims.

### BRIEF DESCRIPTION OF THE SEVERAL VIEWS OF THE DRAWINGS

The foregoing and other features and advantages will be apparent from the following description of particular embodiments, as illustrated in the accompanying drawings, in which like reference characters refer to the same or similar parts throughout the different views.
FIG. 1 is a block diagram of an example environment in which certain embodiments of the improved technique can be practiced.
FIG. 2 is a block diagram of an example data path from which attributes of specified data elements can be obtained.
FIG. 3 is a block diagram that shows an example format of an attribute-only read request.
FIG. 4 is a flowchart showing an example method of obtaining one or more attributes and of applying such attributes in determining whether a ransomware attack is suspected.
FIG. 5 is a flowchart showing an example method of obtaining one or more attributes and of applying such attributes in performing storage tiering.
FIG. 6 is a flowchart showing an example method of obtaining one or more attributes and of applying such attributes in performing fingerprint-based data matching.
FIG. 7 is a flowchart showing an example method of obtaining one or more attributes and of applying such attributes in identifying sequential data.
FIG. 8 is a flowchart showing an example method of obtaining attributes associated with data.

### DETAILED DESCRIPTION

Embodiments of the improved technique will now be described. One should appreciate that such embodiments are provided by way of example to illustrate certain features and principles of the disclosure but are not intended to be limiting.

An improved technique of obtaining attributes associated with data includes providing an attribute-only read request directed to a specified data element, accessing metadata structures that store one or more attributes associated with the specified data element, and returning the attributes but not the data itself in response to the request.

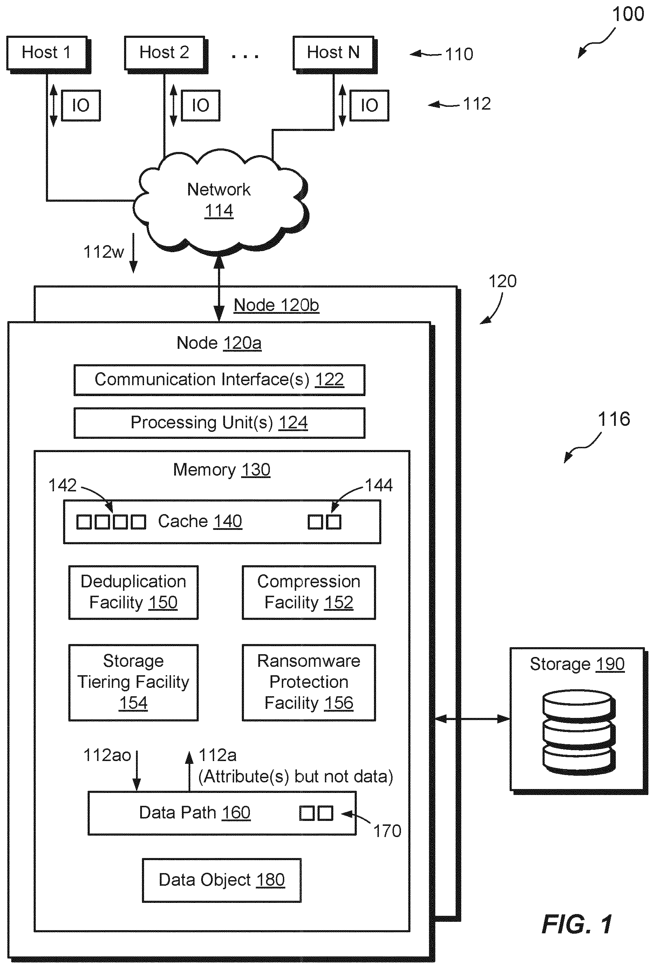

FIG. 1 shows an example environment 100 in which embodiments of the improved technique can be practiced. Here, multiple hosts 110 are configured to access a data storage system 116 over a network 114. The data storage system 116 includes one or more storage processors 120, referred to herein as *"nodes"* (e.g., node 120a and node 120b), and storage 190, such as magnetic disk drives, electronic flash drives, and/or the like. Nodes 120 may be provided as circuit board assemblies or blades, which plug into a chassis (not shown) that encloses and cools the nodes. The chassis has a backplane or midplane for interconnecting the nodes 120, and additional connections may be made among nodes 120 using cables. In some examples, the nodes 120 are part of a storage cluster, such as one which contains any number of storage appliances, where each appliance includes a pair of nodes 120 connected to shared storage. In some arrangements, a host application runs directly on the nodes 120, such that separate host machines 110 need not be present. No particular hardware configuration is required, however, as any number of nodes 120 may be provided, including a single node, in any arrangement, and the node or nodes 120 can be any type or types of computing device capable of running software and processing host I/O's.

The network 114 may be any type of network or combination of networks, such as a storage area network (SAN), a local area network (LAN), a wide area network (WAN), the Internet, and/or some other type of network or combination of networks, for example. In cases where hosts 110 are provided, such hosts 110 may connect to the nodes 120 using various technologies, such as Fibre Channel, iSCSI (Internet small computer system interface), NVMeOF (Nonvolatile Memory Express (NVMe) over Fabrics), NFS (network file system), and CIFS (common Internet file system), for example. As is known, Fibre Channel, iSCSI, and NVMeOF are block-based protocols, whereas NFS and CIFS are file-based protocols. The nodes 120 may each be configured to receive I/O requests 112 according to block-based and/or file-based protocols and to respond to such I/O requests 112 by reading or writing the storage 190.

The depiction of node 120a is intended to be representative of all nodes 120. As shown, node 120a includes one or more communication interfaces 122, a set of processing units 124, and memory 130. The communication interfaces 122 include, for example, SCSI target adapters and/or network interface adapters for converting electronic and/or optical signals received over the network 114 to electronic form for use by the node 120a. The set of processing units 124 includes one or more processing chips and/or assemblies, such as numerous multi-core CPUs (central processing units). The memory 130 includes both volatile memory, e.g., RAM (Random Access Memory), and non-volatile memory, such as one or more ROMs (Read-Only Memories), disk drives, solid state drives, and the like. The set of processing units 124 and the memory 130 together form control circuitry, which is constructed and arranged to carry out various methods and functions as described herein. Also, the memory 130 includes a variety of software constructs realized in the form of executable instructions. When the executable instructions are run by the set of processing units 124, the set of processing units 124 is made to carry out the operations of the software constructs. Although certain software constructs are specifically shown and described, it is understood that the memory 130 typically includes many other software components, which are not shown, such as an operating system, various applications, processes, and daemons.

As further shown in FIG. 1, the memory 130 *"includes,"* i.e., realizes by execution of software instructions, a cache 140 and numerous facilities, such as a deduplication facility 150, a compression facility 152, a storage tiering facility 154, and a ransomware protection facility 156. These facilities may be useful in various embodiments but should not be regarded as required. The memory 130 may further realize a data path 160 and any number of data objects, such as a data object 180. The data object 180 may be any type of object, such as a LUN (Logical UNit), file system, virtual machine disk, or the like.

The data object 180 may be composed of blocks, where a *"block"* is a unit of allocatable storage space. Blocks are typically uniform in size, with typical block sizes being 4 kB (kilo Bytes), 8 kB, or 16 kB, for example. No particular block size is required, however, and embodiments may support non-uniform block sizes. The data storage system 116 is configured to access the data object 180, for example, by specifying blocks of the data object 180 to be created, read, updated, or deleted.

Cache 140 is configured to receive data of incoming write requests 112w from hosts 110 and to arrange the data into pages 142, which may be block-size, for example. The cache 140 may also store recently-read data of the data objects, e.g., blocks obtained from storage 190 in response to read requests directed to specified data. The cache 140 may further store various metadata structures 144, such as those which are part of the data path 160 that have recently been accessed for reading or writing data.

Deduplication facility 150 is configured to perform deduplication, a process whereby redundant blocks are replaced with pointers to a fewer number of retained copies of those blocks. Deduplication may be performed in an inline or near-inline manner, where pages 142 in the cache 140 are compared with a set of existing blocks in the data storage system 116, e.g., using fingerprint-based matching, and duplicate copies are avoided prior to being written to persistent data-object structures. **In** some examples, deduplication may also be performed in the background, i.e., out of band with the initial processing of incoming writes. Deduplication is sometimes abbreviated as *"dedupe,"* and the ability to perform deduplication on data of a data object may be described as that data object's *"dedupability."* **In** an example, metadata may be used to track whether particular blocks are duplicates or originals, e.g., via a dedupe flag.

Compression facility 152 is configured to perform data compression. As with deduplication, compression may be performed inline or near-inline, with pages 142 in cache 140 compressed prior to being written to persistent data-object structures. **In an** example, metadata of data objects track the compressed sizes of blocks. Some blocks are more compressible than others. Typically, compression is performed on a per-block basis after deduplication is attempted.

Storage tiering facility 154 is configured to perform storage tiering, i.e., placement of data into storage tiers within storage 190. Storage *"tiers"* refer to respective classes of storage providing respective levels of performance. For example, the data storage system 116 may support multiple storage tiers that provide, for example, *"highest," "high,"* and *"medium"* levels of performance, with each tier including storage drives (e.g., magnetic disk drives or solid-state drives) capable of meeting the performance requirements of the respective level. In some implementations, the data storage system 116 tracks access patterns of data and moves the data from one tier to another as access patterns change. For example, a data unit that was previously identified as *"cold,"* meaning that it was accessed infrequently for reading and/or writing, may be promoted from the medium tier to the high tier if its access frequency increases. Likewise, a data unit previously identified as "*hot*" may be moved from the highest tier to the high tier if its access frequency decreases.

Ransomware facility 156 is configured to detect suspected ransomware attacks, e.g., based on patterns in blocks received by the data storage system 116, and to protect against such attacks. An example of ransomware detection and protection may be found in copending U.S. Patent Application No. 17/714,689, filed April 6, 2022.

Data path 160 is configured to provide metadata for accessing data objects, such as data object 180. As described in more detail below, data path 160 may include various logical blocks, mapping pointers, and block virtualization structures, some of which may track various attributes 170 of blocks. Such attributes 170 may be available for reading using attribute-only read requests as described herein.

In example operation, hosts 110 issue I/O requests 112 to the data storage system 116. Node 120a receives the I/O requests 112 at the communication interfaces 122 and initiates further processing. Such processing may involve reading and/or writing data objects, such as data object 180. In the course of writing to data objects and/or performing other activities, node 120a may generate and store attributes 170 associated with data, such as attributes associated with individual data blocks.

For example, node 120a may receive a new data block in a write request 112w and attempt to deduplicate the new block. To this end, the deduplication facility 150 may calculate a fingerprint (such as a hash value) that represents the new block and may attempt to match that fingerprint to fingerprints calculated for other blocks that were processed previously. If a match is found, redundant storage of the new block can be avoided. As this processing occurs, node 120a may store *a "fingerprint"* attribute that provides the calculated fingerprint in metadata associated with the new block. The node 120a may also store a *"dedupe flag"* attribute (e.g., a Boolean value) to indicate whether the new block was successfully deduplicated. If the new block cannot be deduplicated (e.g., no matching fingerprint is found) then the new block may be compressed instead. For example, the compression facility 152 compresses the new block. Node 120a then places the compressed block in storage 190. Node 120a may arrange mapping pointers in the data path 160 to point to the new block and may store a *"compressed size"* attribute in the metadata. For example, the compressed-size attribute provides the size of the compressed blocks in bytes or sectors (512-Byte units). When placing the new block in storage 190, the storage tiering facility 154 may assign the new block to a particular storage tier. The node 120a may also write a *"tiering level"* attribute to the metadata associated with the new block. The tiering level may be expressed as a value that explicitly denotes the assigned storage tier (e.g., highest, high, or medium) and/or in some other form, such as by using a data temperature (e.g., hot, warm, or cold).

Some attributes 170, such as the fingerprint attribute, may remain the same over time, whereas other attributes 170 may change. For example, the tiering-level attribute may change if the data temperature of the new block changes and/or if the new block is moved to a different storage tier. Likewise, the dedupe-flag attribute may change if a later-performed deduplication procedure (such as a background procedure) manages to deduplicate the new block.

In accordance with improvements hereof, attribute-only read requests may obtain attributes 170 associated with specified data without retrieving or returning the specified data itself. For example, the data path 160 may receive an attribute-only read request 112ao. The request 112ao is directed to a specified data element, such as a particular block or set of blocks. In response to receiving the request 112ao, the data path 160 may access one or more metadata structures associated with the specified data element, obtain one or more attributes 170 from the metadata structures, and return the attributes 170 in a response 112a. The data path 160 does not retrieve the specified data element, however. Thus, the response 112a includes one or more attributes 170 of the specified data element but not the specified data element itself.

Attribute-only read requests 112ao may provide a useful and efficient option in certain contexts. For example, the ransomware detection facility 156 may issue an attribute-only read request 112ao directed to recently-written blocks for accessing attributes 170 that are relevant to detecting a ransomware attack. Such attributes may include compressed size and dedupe flag, for example. Significantly, the attributes 170 may be read quickly, without suffering the delays normally associated with read requests, which would involve retrieving data from backend storage and may include decompressing the data. Also, the metadata that stores attributes 170 may frequently be found in cache 140, such that an attribute-only read request 112ao can often be achieved just by reading from cache 140, which is much faster than reading from backend storage 190.

As another example, the deduplication facility 150 may issue attribute-only read requests 112ao to obtain fingerprints of blocks quickly and efficiently, e.g., for purposes of block matching. As yet another example, the storage tiering facility 154 may issue attribute-only read requests 112ao to obtain the tiering level of specified blocks. As yet another example, a file system (not shown) may issue an attribute-only read request to blocks of a specified file, to determine, for example, how much storage space can be reclaimed by deleting the file, e.g., by checking the compressed-size attribute of the blocks of the file. Many other use cases are envisioned.

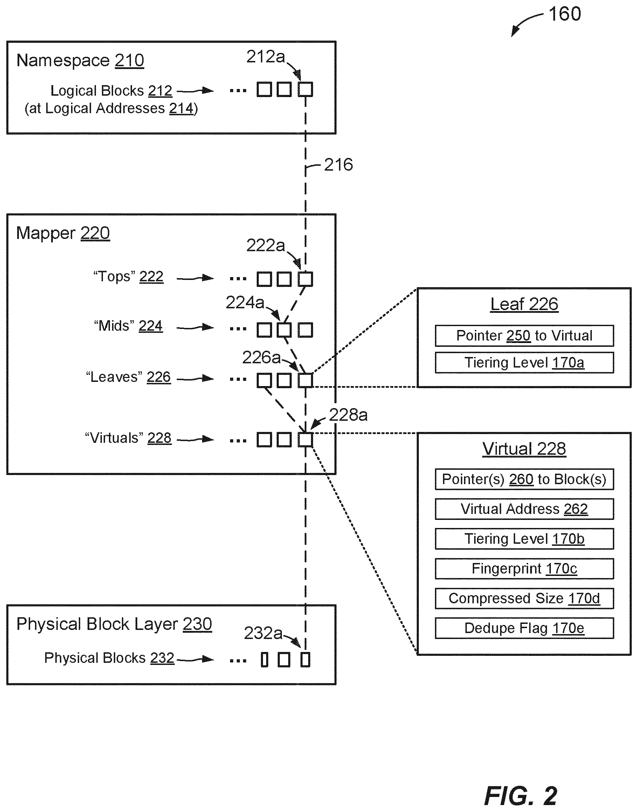

FIG. 2 shows the example data path 160 of FIG. 1 in further detail. As shown, the data path 160 provides an arrangement of metadata in the form of mapping structures, such as pointers, which may be traversed for locating data of the data storage system 116. As described herein, the mapping structures of the data path 160 also perform the role of storing attributes 170, which may be accessed using attribute-only read requests 112ao.

As shown, the data path 160 includes a namespace 210, a mapping structure ("mapper") 220, and a physical block layer 230. The namespace 210 is configured to organize logical data, such as that of LUNs, file systems, virtual machine disks, snapshots, clones, and/or the like. In an example, the namespace 210 provides a large logical address space and is denominated in logical blocks 212.

The mapper 220 is configured to map logical blocks 212 in the namespace 210 to corresponding physical blocks 232 in the physical block layer 230. The physical blocks 232 are normally compressed and may thus have non-uniform size. The mapper 320 may include multiple levels of mapping structures, such as pointers, which are arranged in a tree. The levels include tops 222, mids 224, and leaves 226, which together are capable of mapping large amounts of data. The mapper 220 may also include a layer of virtuals 228, i.e., block virtualization structures for providing indirection between the leaves 226 and physical blocks 232, thus enabling physical blocks 232 to be moved without disturbing leaves 226. The tops 222, mids 224, leaves 226, and virtuals 228 depict individual pointer structures. Such pointer structures may be grouped together in arrays (not shown), which themselves may be stored in blocks.

**In** general, logical blocks 212 in the namespace 210 point to respective physical blocks 232 in the physical block layer 230 via mapping structures in the mapper 220. For example, a logical block 212a in the namespace 210 may point, via a path 216, to a particular top 222a, which points to a particular mid 224a, which points to a particular leaf 226a. The leaf 226a then points to a particular virtual 228a, which points to a particular physical block 232a. With this arrangement, leaves 228 represent corresponding logical blocks 212 in the namespace 210, e.g., each allocated leaf pointer 226 corresponds one-to-one to a respective logical block 212 at a respective logical address 214. Because of block sharing, however, the relationship between leaves 226 and virtuals 228 is not necessarily one-to-one. For example, multiple leaf pointers 226 can point to the same virtual (see virtual 228a).

As shown to the right of FIG. 2, leaf pointer structures 226 may store various attributes 170. For example, leaf pointer 226 may store an attribute 170a for a tiering level. This tiering level 170a may be specific to the logical block to which the leaf corresponds (e.g., logical block 212a) and thus may be independent of tiering levels of other logical blocks, including those mapped to the same physical block 232a. Leaf pointer 226 also includes a pointer 250 to a virtual 228, such as virtual 228a.

Virtual pointer structures 228 may also store various attributes 170. For example, virtual 228 may store its own attribute 170b for tiering level. Unlike the attribute 170a, which is specific to a particular logical block 212, attribute 170b may be common to all logical blocks that share the same physical block 232. Virtual 228 may also store a fingerprint 170c, e.g., a hash value calculated from the physical block 232a prior to compression. Virtual 228 may further store an attribute 170d for compressed size, e.g., the size of compressed block 232a and an attribute for a dedupe flag 170e, which indicates whether the associated physical block, e.g., 232a, is deduplicated. As shown, virtual 228 includes a pointer 260 to a physical block 232, such as physical block 232a. Virtual 228 may also include a virtual address 262, i.e., an address of the virtual 228 within a virtual address space (one that organizes virtuals 228).

The particular attributes 170a through 170e are useful examples, but they are not intended to be limiting. For example, additional attributes 170 may be provided, and the indicated attributes may be replaced with different ones.

In some examples, attributes 170 are placed in mapping structures while processing data blocks for writing, or at other suitable times. The attributes 170 may then be obtained via attribute-only read requests. For example, an attribute-only read request 112ao may be directed to logical block 212a, which may be identified by a logical address 214. The logical address 214 may be expressed simply as a number or range of numbers that represents one or more logical blocks 212.

Once the logical address 214 has been identified, the attribute-only read request 112ao may follow the pointers through the associated mapping structures toward (but not to) the physical data, e.g., physical block 232a. For example, the read request 112ao proceeds from logical block 212a to top 222a, then to mid 224a, and then to leaf 226a. If the desired attribute or attributes are found in leaf 226a, then the read request 112ao may proceed no further, reading those attributes and returning them to the requestor. Otherwise, the read request 112ao may proceed to the pointed-to virtual 228a, where it may retrieve the desired attributes or additional desired attributes and return all obtained attributes to the requestor, proceeding no further down the data path 160.

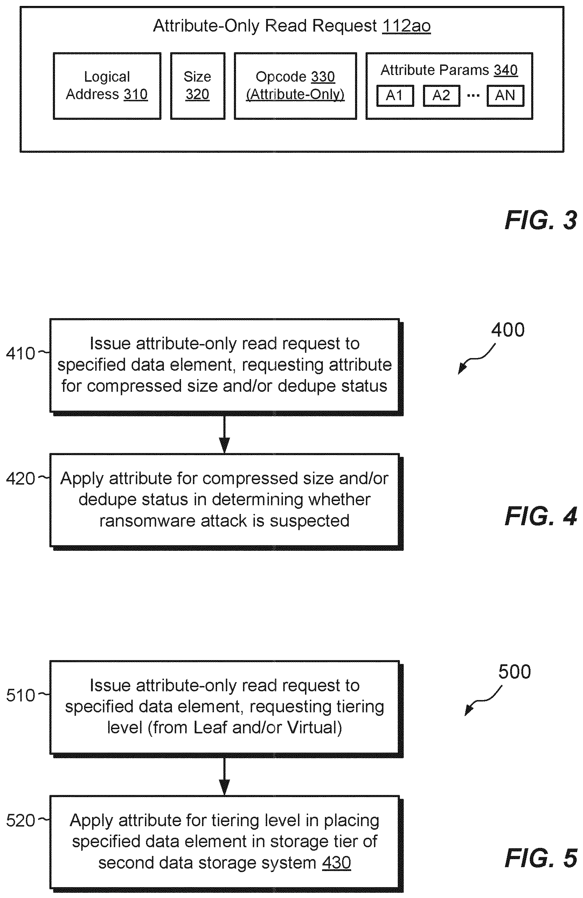

FIG. 3 shows an example format of an attribute-only read request 112ao. The example format includes the following fields:
- Logical address field 310. A logical address that specifies a data element for which one or more attributes are to be read. The logical address may be provided as described above, or in any other way that unambiguously identifies the specified data element.
- Size 320. Length of the specified data element. May be expressed as a number of blocks, for example,
- Opcode 330. A code, such as a digital value, which identifies the type of read request, in this case, an attribute-only read request. Different opcodes may be provided for different types of read requests, such as normal reads (e.g., host reads of user data), replication reads (for performing replication), or attribute-only reads.
- Attribute parameters 340. List of attributes 170 to be returned for a specified data element or for multiple data elements. A parameter 340 may be provided for each attribute 170 available for reading. Parameters 340 may be expressed, for example, as a digital word in which different bit positions correspond to respective attributes. For example, a value of "true" in a bit position may indicate that the attribute assigned to that bit position should be returned, whereas a value of "false" may indicate that the attribute should not be returned. Parameters 340 may apply to attributes of individual blocks, as described for attributes 170a through 170e. Parameters 340 may also apply to groups of blocks. For example, a "sequentiality" parameter may apply to multiple blocks.

The format shown in FIG. 3 is intended to be illustrative rather than limiting. For example, additional or different fields may be provided, and certain fields may be omitted. In addition, individual fields may be structured in any suitable way.

In an example, an attribute-only read request 112ao is formed by specifying the indicated fields in a computer instruction. The above-described format may be defined by an API (application programming interface), such as an API provided for data I/O. In an example, the format defines one or more return values. In an example, an instruction formed using the above format may return a data structure, or multiple data structures, which provide the requested attributes 170 retrieved for the specified data element. If multiple blocks are specified (e.g., Size > 1), separate data structures or separate portions of a single data structure may be returned for providing attributes of respective blocks.

FIGS. 4-8 show example methods 400, 500, 600, 700, and 800 that may be carried out in connection with the environment 100. The methods 400, 500, 600, 700, and 800 are typically performed, for example, by the software constructs described in connection with FIG. 1, which reside in the memory 130 of the node 120a and are run by the set of processing units 124. The various acts of the depicted methods may be ordered in any suitable way. Accordingly, embodiments may be constructed in which acts are performed in orders different from those illustrated, which may include performing some acts simultaneously.

FIG. 4 shows an example method 400 of obtaining one or more attributes 170 and of applying such attributes in determining whether a ransomware attack is suspected. For example, at 410 the ransomware protection facility 152 issues an attribute-only read request 112ao to a specified data element, such as a block at a particular logical address. The request 112ao may specify parameters 340 for compressed size (170d) and dedupe flag (170e), for example. The read request 112ao then traces a path through data path 160 from the logical block 212 specified by the request to the associated top 222, mid 224, leaf 226, and virtual 228. At 420, the read request 112ao obtains the attributes 170d and 170e from the virtual 228 and returns them to the requestor, i.e., the ransomware protection facility 152, which receives the attributes 170d and 170e and applies them as part of a process for determining whether a ransomware attack is suspected.

FIG. 5 shows an example method 500 of obtaining one or more attributes 170 and of applying such attributes in performing storage tiering. For example, at 510 the storage tiering facility 154 issues an attribute-only read request 112ao to a specified data element, identifying any desired parameters, such as per-logical tiering level 170a or per-virtual tiering level 170b. The read request 112ao then traces a path 216 through the data path 160 from the logical block 212 specified by the request to the associated leaf 226 or virtual 228, obtains the attribute 170a or 170b, and returns the attribute to the storage tiering facility 154. At 520, the storage tiering facility 154 applies the attribute in performing storage tiering. For example, the storage tiering facility 154 may aggregate tiering levels obtained for multiple blocks and determine whether the blocks should be moved together to a different storage tier.

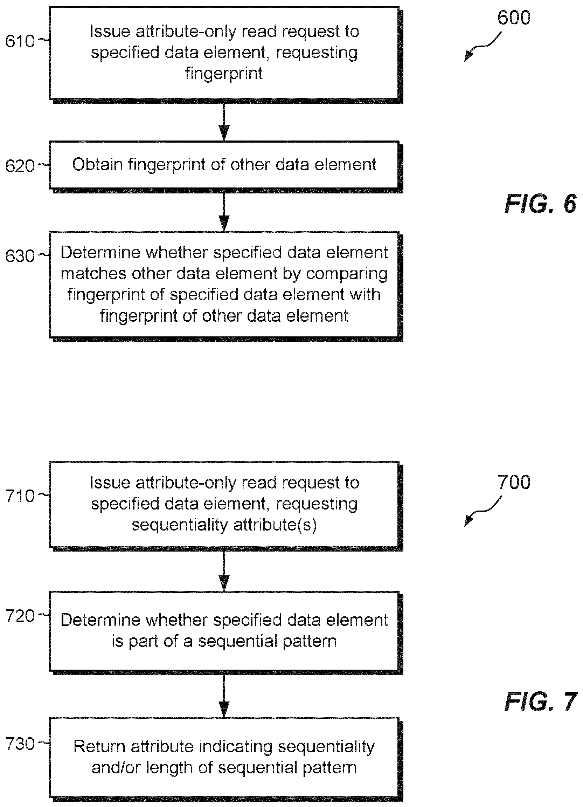

FIG. 6 shows an example method 600 of obtaining one or more attributes 170 and of applying such attributes in performing fingerprint-based data matching. For example, at 610 the deduplication facility 150 issues an attribute-only read request 112ao to a specified data element, identifying any desired parameters 340, such as fingerprint 170c. The read request 112ao then traces a path through the data path 160 from the logical block 212 specified by the request to the associated virtual 228, obtains the attribute 170c, and returns the attribute 170c to the deduplication facility 150. At 620, the deduplication facility 150 applies the attribute 170c in performing block matching. For example, the deduplication facility 150 may compare the fingerprint 170c with a fingerprint calculated from some other data block. A match between the two fingerprints indicates a match between the data blocks, and the deduplication facility 150 may use this match to remove duplicate blocks. One should appreciate that fingerprint-based block matching may be carried out by other components besides the deduplication facility 150, and that embodiments involving fingerprints are not limited to deduplication.

FIG. 7 shows an example method 700 of obtaining one or more attributes and of applying such attributes in identifying sequential data. At 710, a software component running on the node 120a issues an attribute-only read request 112ao to a specified data element, such as a logical block, identifying a parameter 340, such as one for indicating a sequential pattern. At 720, the read request 112ao determines whether the specified data element is part of a sequential pattern. For example, the read request 112ao looks forward and/or back from the specified logical block in the namespace 210 to identify a contiguous range of logical blocks, traces the logical blocks through the data path 160 to respective virtuals 228, and determines whether the virtuals 228 are themselves contiguous (e.g., based on virtual address 262). At 730, if one or more of the virtuals 228 are contiguous with the virtual for the specified data element, then the read request 112ao may return a value that indicates a sequential pattern; otherwise, the read request 112ao may return a value that indicates no sequential pattern. Instead of, or in addition to, returning a value that indicates whether a sequential pattern is found, the read request 112ao may return a length of a detected sequential pattern, e.g., a number of sequential blocks.

**In** some examples, the attribute-only read request 112ao may specify a range of logical blocks, rather than a single block, and the node 120a may return a value indicating whether the range of logical blocks forms a sequential pattern, e.g., whether the logical blocks of the range map to virtuals at sequential virtual addresses 262. The returned information may also indicate a partially sequential pattern. For example, if the specified range of logical blocks includes 16 blocks but only the first 8 blocks map to sequential virtuals, then the read request 112ao may indicate the sequential range in its response.

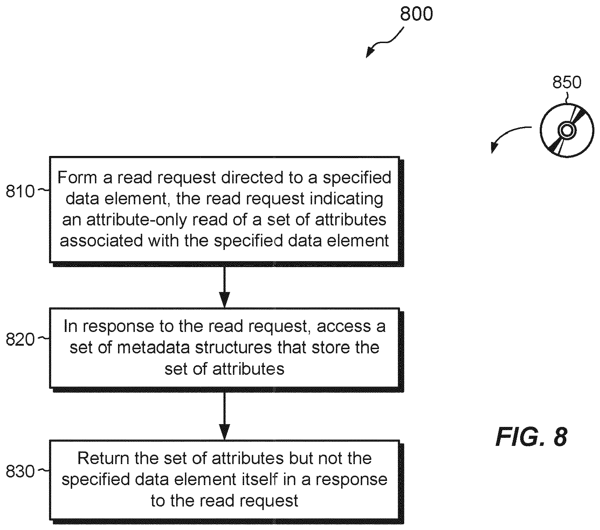

FIG. 8 shows an example method 800 of obtaining attributes associated with data and provides a summary of some of the features described above. At 810, a read request 112ao is formed. For example, a software component running on the node 120a creates a read request 112ao using a format, such as the one shown in FIG. 3. The read request 112ao is directed to a specified data element and indicates an attribute-only read of a set of attributes 170 associated with the specified data element, e.g., by providing parameters 340. The specified data element may be a logical block 212 or multiple logical blocks 212, for example.

At 820, in response to the read request 112ao, a set of metadata structures is accessed that store the set of attributes 170. For example, the read request 112ao traces a path 216 from the specified data element to an associated leaf 226 and/or virtual 228. The read request 112ao then accesses one or more attributes 170 of the specified data from the associated leaf 226 and/or virtual 228.

At 830, the set of attributes but not the specified data element itself is returned in a response to the read request 112ao. For example, attributes obtained from the leaf 226 and/or virtual 228 are returned in one or more data structures to the requestor of the read request 112ao. Data of one or more physical blocks 232 is not returned, however.

An improved technique has been described for obtaining attributes 170 associated with data. The technique includes providing an attribute-only read request 112ao directed to a specified data element, accessing metadata structures 226 and/or 228 that store one or more attributes 170 associated with the specified data element, and returning the attribute (or attributes) but not the data itself in response to the request 112ao.

Having described certain embodiments, numerous alternative embodiments or variations can be made. For example, embodiments have been described in which read requests return attributes 170 but not data. However, embodiments may also be constructed in which read requests return both attributes and data. Such embodiments may be arranged similarly to those described above, except that, in addition to accessing and returning attributes 170, they also access and return one or more associated physical blocks 232, which may include decompressing such blocks.

Also, embodiments have been described in which attributes 170 are accessed from leaves 226 and/or virtuals 228. This is merely an example, however, as some embodiments may obtain attributes from mids 224, tops 222, or other metadata structures.

Also, although embodiments have been described in which attribute-only read requests originate from components that operate within a data storage system, this is merely an example, as attribute-only read requests 112ao may also originate from hosts 110.

Further, although embodiments have been described that involve one or more data storage systems, other embodiments may involve computers, including those not normally regarded as data storage systems. Such computers may include servers, such as those used in data centers and enterprises, as well as general purpose computers, personal computers, and numerous devices, such as smart phones, tablet computers, personal data assistants, and the like.

Further still, the improvement or portions thereof may be embodied as a computer program product including one or more non-transient, computer-readable storage media, such as a magnetic disk, magnetic tape, compact disk, DVD, optical disk, flash drive, solid state drive, SD (Secure Digital) chip or device, Application Specific Integrated Circuit (ASIC), Field Programmable Gate Array (FPGA), and/or the like (shown by way of example as medium 850 in FIG. 8). Any number of computer-readable media may be used. The media may be encoded with instructions which, when executed on one or more computers or other processors, perform the process or processes described herein. Such media may be considered articles of manufacture or machines, and may be transportable from one machine to another.

As used throughout this document, the words *"comprising," "including," "containing,"* and *"having"* are intended to set forth certain items, steps, elements, or aspects of something in an open-ended fashion. Also, as used herein and unless a specific statement is made to the contrary, the word *"set"* means one or more of something. This is the case regardless of whether the phrase *"set of"* is followed by a singular or plural object and regardless of whether it is conjugated with a singular or plural verb. Also, a *"set of"* elements can describe fewer than all elements present. Thus, there may be additional elements of the same kind that are not part of the set. Further, ordinal expressions, such as *"first," "second," "third,"* and so on, may be used as adjectives herein for identification purposes. Unless specifically indicated, these ordinal expressions are not intended to imply any ordering or sequence. Thus, for example, a *"second"* event may take place before or after a *"first* event," or even if no first event ever occurs. In addition, an identification herein of a particular element, feature, or act as being a *"first"* such element, feature, or act should not be construed as requiring that there must also be a *"second"* or other such element, feature or act. Rather, the *"first"* item may be the only one. Also, and unless specifically stated to the contrary, *"based on"* is intended to be nonexclusive. Thus, *"based on"* should be interpreted as meaning *"based at least in part on"* unless specifically indicated otherwise. Although certain embodiments are disclosed herein, it is understood that these are provided by way of example only and should not be construed as limiting.

## Claims

1. A method of obtaining attributes (170) associated with data, comprising:
forming, by a ransomware detection facility (156) of a node (120a), a read request (112ao) directed to a specified data element associated with a logical block (212a), the logical block (212a) corresponding to a physical block (232a) which is compressed, the read request (112ao) indicating an attribute-only read of a set of attributes (170) associated with the specified data element, the set of attributes (170) including at least a compressed size (170d) and a dedupe flag (170e), wherein the compressed size (170d) indicates a size of the compressed physical block (232a) and the dedupe flag (170e) indicates whether said physical block is deduplicated, wherein compression is performed on a per-block basis in response to an unsuccessful deduplication attempt;
in response to the read request (112ao), accessing, by a data path (160) of the node (120a), a set of metadata structures that store the set of attributes (170);
returning, by the data path (160) to the ransomware detection facility (156), the set of attributes (170) but not the specified data element itself in a response to the read request (112ao); and
determining, by the ransomware detection facility (156), whether a ransomware attack is suspected, based at least on the compressed size (170d) and the dedupe flag (170e) associated with the specified data element.

2. The method of claim 1, wherein forming the read request (112ao) includes specifying the data element based at least in part on a logical address (214) of the specified data element.

3. The method of claim 2, wherein accessing the set of metadata structures includes accessing mapping structures in a path between the logical address data associated with the logical address (214).

4. The method of claim 3, wherein the mapping structures include a block virtualization structure disposed in the path between a leaf pointer structure and the data associated with the logical address (214).

5. The method of claim 3, wherein the mapping structures include a leaf pointer structure disposed in the path to the data associated with the logical address (214).

6. The method of claim 3, further comprising
accessing metadata structures of multiple data elements having logical addresses contiguous to the logical address (214) of the specified data element; and
determining whether the specified data element is part of a sequential pattern of data elements sequentially written to the data storage system (116),
wherein returning the set of attributes (170) includes providing an attribute (170) that indicates whether the specified data element is part of a sequential pattern.

7. The method of claim 6, wherein returning the set of attributes (170) includes providing a length of the sequential pattern.

8. The method of claim 3, wherein the specified data element is stored in a first data storage system, wherein the set of attributes (170) includes a storage tiering attribute that indicates a tiering level of the specified data element in the first data storage system, and wherein the method further comprises copying the specified data element to a second data storage system in a storage tier that provides the tiering level indicated by the tiering attribute.

9. The method of claim 8, wherein accessing the set of metadata structures includes obtaining the tiering attribute from a leaf pointer structure in the metadata path.

10. The method of claim 8, wherein accessing the set of metadata structures includes obtaining the tiering attribute from a block virtualization structure in the metadata path.

11. The method of claim 1, wherein forming the read request (112ao) includes specifying an opcode (330) that identifies the read request (112ao) as an attribute-only read request, and wherein returning the set of attributes (170) but not the specified data element is performed in response to the opcode (330).

12. The method of claim 1, wherein forming the read request (112ao) includes specifying a set of parameters (340) that individually identify attributes (170) to be returned in response to the read request (112ao), and wherein the method further comprises obtaining the individually identified attributes (170) from the set of metadata structures.

13. The method of claim 1, wherein the set of attributes (170) includes at least one of (i) an indication of compressed size of the specified data element and (ii) an indication of whether the specified data element has been deduplicated.

14. The method of claim 1, wherein the set of attributes (170) includes a fingerprint (170c) computed from the specified data element, and wherein the method further comprises comparing the fingerprint (170c) from the specified data element with a fingerprint (170c) computed from another data element to determine whether the specified data element matches the other data element.

15. The method of claim 1, wherein accessing the set of metadata structures that store the set of attributes (170) includes obtaining the set of metadata structures from cache.

16. A computerized apparatus (120a), comprising control circuitry that includes a set of processing units (124) coupled to memory, the control circuitry constructed and arranged to:
form, by a ransomware detection facility (156) of a node (120a), a read request (112ao) directed to a specified data element associated with a logical block (212a), the logical block (212a) corresponding to a physical block (232a) which is compressed, the read request (112ao) indicating an attribute-only read of a set of attributes (170) associated with the specified data element, the set of attributes (170) including at least a compressed size (170d) and a dedupe flag (170e), wherein the compressed size (170d) indicates a size of the compressed physical block (232a) and the dedupe flag (170e) indicates whether said physical block is deduplicated, wherein compression is performed on a per-block basis in response to an unsuccessful deduplication attempt;
in response to the read request (112ao), access, by a data path (160) of the node (120a), a set of metadata structures that store the set of attributes (170);
return, by the data path (160) to the ransomware detection facility (156), the set of attributes (170) but not the specified data element itself in a response to the read request (112ao); and
determine, by the ransomware detection facility (156), whether a ransomware attack is suspected, based at least on the compressed size (170d) and the dedupe flag (170e) associated with the specified data element.

17. A computer program product including a set of non-transitory, computer-readable media having instructions which, when executed by control circuitry of a computerized apparatus (120a), cause the computerized apparatus (120a) to perform a method in accordance with any one of claims 1 to 15.

## Patentansprüche

1. Verfahren zum Erlangen von Attributen (170), die Daten zugeordnet sind, umfassend:
Erzeugen, durch eine Ransomware-Erkennungseinrichtung (156) eines Knotens (120a), einer Leseanforderung (112ao), die auf ein spezifiziertes Datenelement gerichtet ist, das einem logischen Block (212a) zugeordnet ist, wobei der logische Block (212a) einem physischen Block (232a) entspricht, der komprimiert ist,
wobei die Leseanforderung (112ao) ein Nur-Attribut-Lesen eines Satzes von Attributen (170) angibt, der dem spezifizierten Datenelement zugeordnet ist, wobei der Satz von Attributen (170 ) mindestens eine komprimierte Größe (170d) und ein Deduplizierungs-Flag (170e) beinhaltet, wobei die komprimierte Größe (170d) eine Größe des komprimierten physischen Blocks (232a) angibt und das Deduplizierungs-Flag (170e) angibt, ob der physische Block dedupliziert ist, wobei die Komprimierung blockweise als Reaktion auf einen nicht erfolgreichen Deduplizierungsversuch durchgeführt wird;
als Reaktion auf die Leseanforderung (112ao), Zugreifen, über einen Datenpfad (160) des Knotens (120a), auf einen Satz von Metadatenstrukturen, der den Satz von Attributen (170) speichert;
Zurückgeben, über den Datenpfad (160) an die Ransomware-Erkennungseinrichtung (156), des Satzes von Attributen (170), jedoch nicht des spezifizierten Datenelements selbst, als Reaktion auf die Leseanforderung (112ao); und
Bestimmen, durch die Ransomware-Erkennungseinrichtung (156), ob ein Ransomware-Angriff vermutet wird, basierend zumindest auf der komprimierten Größe (170d) und dem Deduplizierungs-Flag (170e), die dem spezifizierten Datenelement zugeordnet sind.

2. Verfahren nach Anspruch 1, wobei das Erzeugen der Leseanforderung (112ao) das Spezifizieren des Datenelements basierend zumindest teilweise auf einer logischen Adresse (214) des spezifizierten Datenelements beinhaltet.

3. Verfahren nach Anspruch 2, wobei das Zugreifen auf den Satz von Metadatenstrukturen das Zugreifen auf Abbildungsstrukturen in einem Pfad zwischen den der logischen Adresse (214) zugeordneten logischen Adressdaten beinhaltet.

4. Verfahren nach Anspruch 3, wobei die Abbildungsstrukturen eine Block-Virtualisierungsstruktur beinhalten, die in dem Pfad zwischen einer Blattzeigerstruktur und den der logischen Adresse (214) zugeordneten Daten angeordnet ist.

5. Verfahren nach Anspruch 3, wobei die Abbildungsstrukturen eine Blattzeigerstruktur beinhalten, die in dem Pfad zu den der logischen Adresse (214) zugeordneten Daten angeordnet ist.

6. Verfahren nach Anspruch 3, ferner umfassend Zugreifen auf Metadatenstrukturen von mehreren Datenelementen mit logischen Adressen, die an die logische Adresse (214) des spezifizierten Datenelements angrenzen; und
Bestimmen, ob das spezifizierte Datenelement Teil eines sequenziellen Musters von Datenelementen ist, die sequenziell in das Datenspeichersystem (116) geschrieben wurden,
wobei das Zurückgeben des Satzes von Attributen (170) das Bereitstellen eines Attributs (170) beinhaltet, das angibt, ob das spezifizierte Datenelement Teil eines sequenziellen Musters ist.

7. Verfahren nach Anspruch 6, wobei das Zurückgeben des Satzes von Attributen (170) das Bereitstellen einer Länge des sequenziellen Musters beinhaltet.

8. Verfahren nach Anspruch 3, wobei das spezifizierte Datenelement in einem ersten Datenspeichersystem gespeichert ist, wobei der Satz von Attributen (170) ein Speicher-Tiering-Attribut beinhaltet, das einen Tiering-Level des spezifizierten Datenelements in dem ersten Datenspeichersystem angibt, und wobei das Verfahren ferner das Kopieren des spezifizierten Datenelements in ein zweites Datenspeichersystem in einer Speicherebene umfasst, die die durch das Tiering-Attribut angegebene Tiering-Stufe bereitstellt.

9. Verfahren nach Anspruch 8, wobei das Zugreifen auf den Satz von Metadatenstrukturen das Erlangen des Tiering-Attributs von einer Blattzeigerstruktur in dem Metadatenpfad beinhaltet.

10. Verfahren nach Anspruch 8, wobei das Zugreifen auf den Satz von Metadatenstrukturen das Erlangen des Tiering-Attributs von einer Block-Virtualisierungsstruktur in dem Metadatenpfad beinhaltet.

11. Verfahren nach Anspruch 1, wobei das Erzeugen der Leseanforderung (112ao) das Spezifizieren eines Operationscodes (330) beinhaltet, der die Leseanforderung (112ao) als eine Anfrage zum Nur-Attribut-Lesen identifiziert, und wobei das Zurückgeben des Satzes von Attributen (170), jedoch nicht des spezifizierten Datenelements, als Reaktion auf den Operationscode (330) durchgeführt wird.

12. Verfahren nach Anspruch 1, wobei das Erzeugen der Leseanforderung (112ao) das Spezifizieren eines Satzes von Parametern (340) beinhaltet, der individuell Attribute (170) identifiziert, die als Reaktion auf die Leseanforderung (112ao) zurückgegeben werden sollen, und wobei das Verfahren ferner das Erlangen der individuell identifizierten Attribute (170) aus dem Satz von Metadatenstrukturen umfasst.

13. Verfahren nach Anspruch 1, wobei der Satz von Attributen (170) mindestens eine von (i) einer Angabe der komprimierten Größe des spezifizierten Datenelements und (ii) einer Angabe, ob das spezifizierte Datenelement dedupliziert wurde, beinhaltet.

14. Verfahren nach Anspruch 1, wobei der Satz von Attributen (170) einen von dem spezifizierten Datenelement berechneten Fingerabdruck (170c) beinhaltet und wobei das Verfahren ferner das Vergleichen des Fingerabdrucks (170c) von dem spezifizierten Datenelement mit einem von einem anderen Datenelement berechneten Fingerabdruck (170c) umfasst, um zu bestimmen, ob das spezifizierte Datenelement mit dem anderen Datenelement übereinstimmt.

15. Verfahren nach Anspruch 1, wobei das Zugreifen auf den Satz von Metadatenstrukturen, die den Satz von Attributen (170) speichern, das Erlangen des Satzes von Metadatenstrukturen aus einem Cache beinhaltet.

16. Computergestützte Vorrichtung (120a), umfassend eine Steuerschaltung, die einen Satz von Verarbeitungseinheiten (124) beinhaltet, der mit einem Speicher gekoppelt ist, wobei die Steuerschaltung zu Folgendem konstruiert und eingerichtet ist:
Erzeugen, durch eine Ransomware-Erkennungseinrichtung (156) eines Knotens (120a), einer Leseanforderung (112ao), die auf ein spezifiziertes Datenelement gerichtet ist, das einem logischen Block (212a) zugeordnet ist, wobei der logische Block (212a) einem physischen Block (232a) entspricht, der komprimiert ist,
wobei die Leseanforderung (112ao) ein Nur-Attribut-Lesen eines Satzes von Attributen (170) angibt, der dem spezifizierten Datenelement zugeordnet ist, wobei der Satz von Attributen (170) mindestens eine komprimierte Größe (170d) und ein Deduplizierungs-Flag (170e) beinhaltet, wobei die komprimierte Größe (170d) eine Größe des komprimierten physischen Blocks (232a) angibt und das Deduplizierungs-Flag (170e) angibt, ob der physische Block dedupliziert ist, wobei die Komprimierung blockweise als Reaktion auf einen nicht erfolgreichen Deduplizierungsversuch durchgeführt wird;
als Reaktion auf die Leseanforderung (112ao), Zugreifen, über einen Datenpfad (160) des Knotens (120a), auf einen Satz von Metadatenstrukturen, der den Satz von Attributen (170) speichert;
Zurückgeben, über den Datenpfad (160) an die Ransomware-Erkennungseinrichtung (156), des Satzes von Attributen (170), jedoch nicht des spezifizierten Datenelements selbst, als Reaktion auf die Leseanforderung (112ao); und
Bestimmen, durch die Ransomware-Erkennungseinrichtung (156), ob ein Ransomware-Angriff vermutet wird, basierend zumindest auf der komprimierten Größe (170d) und dem Deduplizierungs-Flag (170e), die dem spezifizierten Datenelement zugeordnet sind.

17. Computerprogrammprodukt, das einen Satz von nichtflüchtigen, computerlesbaren Medien mit Anweisungen beinhaltet, die bei Ausführung durch eine Steuerschaltung einer computergestützten Vorrichtung (120a) die computergestützte Vorrichtung (120a) dazu veranlassen, ein Verfahren gemäß einem der Ansprüche 1 bis 15 durchzuführen.

## Revendications

1. Procédé d'obtention d'attributs (170) associés à des données, comprenant :
la formation, par un dispositif de détection de logiciel rançonneur (156) d'un nœud (120a), d'une requête de lecture (112ao) dirigée vers un élément de données spécifié associé à un bloc logique (212a), le bloc logique (212a) correspondant à un bloc physique (232a) qui est compressé, la requête de lecture (112ao) indiquant une lecture uniquement par attributs d'un ensemble d'attributs (170) associés à l'élément de données spécifié, l'ensemble d'attributs (170) comportant au moins une taille compressée (170d) et un indicateur de déduplication (170e), dans lequel la taille compressée (170d) indique une taille du bloc physique compressé (232a) et l'indicateur de déduplication (170e) indique si ledit bloc physique est dédupliqué, dans lequel la compression est réalisée bloc par bloc en réponse à une tentative de déduplication infructueuse ;
en réponse à la requête de lecture (112ao), l'accès, par un chemin de données (160) du nœud (120a), à un ensemble de structures de métadonnées qui stockent l'ensemble d'attributs (170) ;
le renvoi, par le chemin de données (160) au dispositif de détection de logiciel rançonneur (156), de l'ensemble d'attributs (170) mais pas de l'élément de données spécifié lui-même en réponse à la requête de lecture (112ao) ; et
le fait de déterminer, par le dispositif de détection de logiciel rançonneur (156), si une attaque de logiciel rançonneur est suspectée, sur la base au moins de la taille compressée (170d) et de l'indicateur de déduplication (170e) associé à l'élément de données spécifié.

2. Procédé selon la revendication 1, dans lequel la formation de la requête de lecture (112ao) comporte la spécification de l'élément de données sur la base au moins en partie d'une adresse logique (214) de l'élément de données spécifié.

3. Procédé selon la revendication 2, dans lequel l'accès à l'ensemble de structures de métadonnées comporte l'accès à des structures de mappage dans un chemin entre les données d'adresse logique associées à l'adresse logique (214).

4. Procédé selon la revendication 3, dans lequel les structures de mappage comportent une structure de virtualisation de bloc disposée dans le chemin entre une structure de pointeur de feuille et les données associées à l'adresse logique (214).

5. Procédé selon la revendication 3, dans lequel les structures de mappage comportent une structure de pointeur de feuille disposée dans le chemin vers les données associées à l'adresse logique (214).

6. Procédé selon la revendication 3, comprenant également l'accès à des structures de métadonnées de multiples éléments de données ayant des adresses logiques contiguës à l'adresse logique (214) de l'élément de données spécifié ; et
le fait de déterminer si l'élément de données spécifié fait partie d'un modèle séquentiel d'éléments de données écrits séquentiellement dans le système de stockage de données (116), dans lequel le renvoi de l'ensemble d'attributs (170) comporte la fourniture d'un attribut (170) qui indique si l'élément de données spécifié fait partie d'un modèle séquentiel.

7. Procédé de la revendication 6, dans lequel le renvoi de l'ensemble d'attributs (170) comporte la fourniture d'une longueur du modèle séquentiel.

8. Procédé selon la revendication 3, dans lequel l'élément de données spécifié est stocké dans un premier système de stockage de données, dans lequel l'ensemble d'attributs (170) comporte un attribut de hiérarchisation de stockage qui indique un niveau de hiérarchisation de l'élément de données spécifié dans le premier système de stockage de données, et dans lequel le procédé comprend également la copie de l'élément de données spécifié dans un second système de stockage de données dans un niveau de stockage qui fournit le niveau de hiérarchisation indiqué par l'attribut de hiérarchisation.

9. Procédé selon la revendication 8, dans lequel l'accès à l'ensemble de structures de métadonnées comporte l'obtention de l'attribut de hiérarchisation à partir d'une structure de pointeur de feuille dans le chemin de métadonnées.

10. Procédé selon la revendication 8, dans lequel l'accès à l'ensemble de structures de métadonnées comporte l'obtention de l'attribut de hiérarchisation à partir d'une structure de virtualisation de bloc dans le chemin de métadonnées.

11. Procédé selon la revendication 1, dans lequel la formation de la requête de lecture (112ao) comporte la spécification d'un opcode (330) qui identifie la requête de lecture (112ao) comme une requête de lecture uniquement par attributs, et dans lequel le renvoi de l'ensemble d'attributs (170) mais pas de l'élément de données spécifié est réalisé en réponse à l'opcode (330).

12. Procédé selon la revendication 1, dans lequel la formation de la requête de lecture (112ao) comporte la spécification d'un ensemble de paramètres (340) qui identifient individuellement les attributs (170) à renvoyer en réponse à la requête de lecture (112ao), et dans lequel le procédé comprend également l'obtention des attributs identifiés individuellement (170) à partir de l'ensemble de structures de métadonnées.

13. Procédé selon la revendication 1, dans lequel l'ensemble d'attributs (170) comporte au moins l'un (i) d'une indication de taille compressée de l'élément de données spécifié et (ii) d'une indication de savoir si l'élément de données spécifié a été dédupliqué.

14. Procédé selon la revendication 1, dans lequel l'ensemble d'attributs (170) comporte une empreinte digitale (170c) calculée à partir de l'élément de données spécifié, et dans lequel le procédé comprend également la comparaison de l'empreinte digitale (170c) de l'élément de données spécifié avec une empreinte digitale (170c) calculée à partir d'un autre élément de données pour déterminer si l'élément de données spécifié correspond à l'autre élément de données.

15. Procédé selon la revendication 1, dans lequel l'accès à l'ensemble de structures de métadonnées qui stockent l'ensemble d'attributs (170) comporte l'obtention de l'ensemble de structures de métadonnées à partir du cache.

16. Appareil informatisé (120a), comprenant un circuit de commande qui comporte un ensemble d'unités de traitement (124) couplées à une mémoire, le circuit de commande étant construit et agencé pour :
former, par un dispositif de détection de logiciel rançonneur (156) d'un nœud (120a), une requête de lecture (112ao) dirigée vers un élément de données spécifié associé à un bloc logique (212a), le bloc logique (212a) correspondant à un bloc physique (232a) qui est compressé, la requête de lecture (112ao) indiquant une lecture uniquement par attributs d'un ensemble d'attributs (170) associés à l'élément de données spécifié, l'ensemble d'attributs (170) comportant au moins une taille compressée (170d) et un indicateur de déduplication (170e), dans lequel la taille compressée (170d) indique une taille du bloc physique compressé (232a) et l'indicateur de déduplication (170e) indique si ledit bloc physique est dédupliqué, dans lequel la compression est réalisée bloc par bloc en réponse à une tentative de déduplication infructueuse ;
en réponse à la requête de lecture (112ao), accéder, par un chemin de données (160) du nœud (120a), à un ensemble de structures de métadonnées qui stockent l'ensemble d'attributs (170) ;
renvoyer, par le chemin de données (160) au dispositif de détection de logiciel rançonneur (156), l'ensemble d'attributs (170) mais pas l'élément de données spécifié lui-même en réponse à la requête de lecture (112ao) ; et
déterminer, par le dispositif de détection de logiciel rançonneur (156), si une attaque de logiciel rançonneur est suspectée, sur la base au moins de la taille compressée (170d) et de l'indicateur de déduplication (170e) associé à l'élément de données spécifié.

17. Produit de programme informatique comportant un ensemble de supports non transitoires lisibles par ordinateur ayant des instructions qui, lorsqu'elles sont exécutées par un circuit de commande d'un appareil informatisé (120a), amènent l'appareil informatisé (120a) à réaliser un procédé selon l'une quelconque des revendications 1 à 15.
